(19) Europäisches Patentamt
European Patent Office
Office européen des brevets

(11) Veröffentlichungsnummer : **0 302 483 B1**

(12) # EUROPÄISCHE PATENTSCHRIFT

(45) Veröffentlichungstag der Patentschrift :
24.07.91 Patentblatt 91/30

(51) Int. Cl.$^5$ : **C08L 77/00, C08L 77/02, C08K 5/53, C08K 3/34**

(21) Anmeldenummer : 88112667.6

(22) Anmeldetag : 04.08.88

(54) **Feststoffmischung aus nukleierten und nicht-nukleierten Polyamiden.**

(30) Priorität : 06.08.87 DE 3726125

(43) Veröffentlichungstag der Anmeldung :
08.02.89 Patentblatt 89/06

(45) Bekanntmachung des Hinweises auf die
Patenterteilung :
24.07.91 Patentblatt 91/30

(84) Benannte Vertragsstaaten :
BE DE FR GB NL

(56) Entgegenhaltungen :
US-A- 3 080 345
US-A- 4 461 808
CHEMICAL ABSTRACTS, Band 97, 15. November 1982, Seite 21, Ref.Nr. 163758v, Columbus, Ohio, US; H.K. KIM et al.: "A study of the crystallization kinectics of nylon 66 by the depolarized light intensity method" & POL-LIMO 1982, 6(4), 240-7

(56) Entgegenhaltungen :
CHEMICAL ABSTRACTS, Band 94, 23. März 1981, Seite 17, Ref.Nr. 84732s, Columbus, Ohio, US; G. GURATO et al.: "Heterogeneous nucleation phenomena and their applications in polymer production" & CHIM. IND. (Milan) 1980, 62(10), 743-51

(73) Patentinhaber : BASF Aktiengesellschaft
Carl-Bosch-Strasse 38
W-6700 Ludwigshafen (DE)

(72) Erfinder : Betz, Walter, Dr.
Weimarer Strasse 45
W-6700 Ludwigshafen (DE)
Erfinder : Koch, Eckhard Michael, Dr.
Merowingerstrasse 8
W-6701 Fussgoenheim (DE)
Erfinder : Plachetta, Cristoph, Dr.
Albert-Einstein-Allee 12
W-6703 Limburgerhof (DE)
Erfinder : Blinne, Gerd, Dr.
Im Woogtal 7
W-6719 Bobenheim (DE)
Erfinder : Hahn, Karl, Dr.
Salierstrasse 3
W-6701 Maxdorf (DE)

## Beschreibung

Die Erfindung betrifft Feststoffmischungen, enthaltend als wesentliche Komponenten,

A) 40 bis 99 Gew.%, bezogen auf das Gesamtgewicht von A) und B), eines nicht-nukleierten thermoplastischen Polyamids und

B) 1 bis 60 Gew.%, bezogen auf das Gesamtgewicht von A) und B), eines thermoplastischen Polyamids, welches ein Nukleierungsmittel enthält, sowie darüber hinaus

C) 0 bis 60 Gew.%, bezogen auf das Gesamtgewicht von A) + B) + C), faser-oder teilchenförmige Füllstoffe.

Außerdem betrifft die Erfindung die Verwendung derartiger Feststoffmischungen zur Herstellung von Formkörpern sowie Formkörper mit heterogener Sphärolithgrößenverteilung, die aus den erfindungsgemäßen Feststoffmischungen als wesentlichen Komponenten erhältlich sind.

Polyamide sind eine Kunststoffklasse, die in weiten Bereichen Anwendung findet, z.B. als Gehäusewerkstoffe, im Automobilbau und im Bausektor, um nur einige Anwendungsgebiete zu nennen.

Für viele Anwendungszwecke wäre es wünschenswert, steife und auch bei tiefen Temperaturen noch ausreichend zähe Polyamide zur Verfügung zu haben.

Die Schlagzähmodifizierung von Polyamiden mit Elastomeren (Kautschuken) zur Verbesserung der Schlagzähigkeit bei tiefen Temperaturen ist seit langem bekannt und in der Literatur beschrieben. Durch den Zusatz von Elastomeren wird jedoch die Steifigkeit der Polyamide beeinträchtigt, insbesondere sinkt der Elastizitätsmodul auf Werte, die für viele Anwendungen nicht akzeptabel sind.

Durch Zugabe von Glasfasern oder anderen verstärkenden Füllstoffen zu elastomermodifizierten Polyamiden läßt sich zwar die Steifigkeit wieder verbessern, doch geht dies mit einer starken Beeinträchtigung der Schlagzähigkeitseigenschaften einher ; darüber hinaus bringen verstärkende Füllstoffe infolge von Orientierungseffekten häufig eine Anisotropie von mechanischen Eigenschaften, d.h. eine starke Schwankung der mechanischen Eigenschaften in Abhängigkeit davon, ob in Orientierungsrichtung der Füllstoffe oder senkrecht dazu gemessen wird, mit sich. Das ist häufig unerwünscht.

Aufgabe der vorliegenden Erfindung war es daher, Formmassen auf der Basis von Polyamiden zur Verfügung zu stellen, aus denen Formkörper mit einer guten Steifigkeit (insbesondere einem hohen Elastizitätsmodul) und einer guten Schlagzähigkeit auch bei tiefen Temperaturen hergestellt werden können.

Diese Aufgabe wird erfindungsgemäß durch die eingangs definierten Feststoffmischungen gemäß Anspruch 1 gelöst.

Die erfindungsgemäßen Feststoffmischungen enthalten als wesentliche Komponente A) 40 bis 99, vorzugsweise 60 bis 95 und insbesondere 75 bis 90 Gew.%, bezogen auf das Gesamtgewicht der Komponenten A) und B) eines nicht nukleierten thermoplastischen Polyamids, d.h. eines Polyamids, welches im wesentlichen keine Zusätze enthält, die als Nukleierungsmittel wirken. Dies schließt selbstverständlich nicht aus, daß andere übliche Zusatzstoffe, z.B. Pigmente, Farbstoffe, Gleitmittel etc. enthalten sind.

Die als Komponente A) eingesetzten Polyamide sind an sich bekannt. Halbkristalline oder amorphe Harze mit einem Molekulargewicht (Gewichtsmittelwert) von mindestens 5000, wie sie z.B. in den US-Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7-13 Ringgliedern ableiten, wie Polycaprolactam, Polycapryllactam und Polylaurinlactam, sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen, und aromatische Dicarbonsäuren einsetzbar. Hier seien nur Adipinsäure, Azelainsäure, Sebacinsäure, Dodecandisäure und Terephthal- und/oder Isophthalsäure genannt.

Als Diamine eignen sich besonders Alkandiamine mit 4 bis 12, insbesondere 4 bis 8 Kohlenstoffatomen, sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan. Weiterhin sind Polyamide, die durch Copolymerisation zweier oder mehrerer der vorgenannten Monomeren erhältlich sind, oder Mischungen mehrerer Polyamide geeignet.

Besonders bevorzugt werden Polycaprolactam, Polyhexamethylenadipinsäureamid, Copolyamide aus Caprolactam, Terephthalsäure und Hexamethylendiamin und Copolyamide aus Adipinsäure, Terephthalsäure und Hexamethylendiamin.

Verfahren zur Herstellung dieser Polyamide wie auch die Polyamide selbst sind an sich bekannt und in der Literatur beschrieben, so daß sich hier nähere Angaben erübrigen.

Die relative Viskosität der Polyamide liegt im allgemeinen im Bereich von 2,0 bis 5,0, vorzugsweise von 2,2 bis 4,5, gemessen in 1%iger Lösung in 96%iger Schwefelsäure bei 25°C.

Als Komponente B) enthalten die erfindungsgemäßen Feststoffmischungen 1 bis 60, vorzugsweise 5 bis 40 und besonders bevorzugt 10 bis 25 Gew.%, bezogen auf das Gesamtgewicht der Komponenten A) und B), eines thermoplastischen Polyamids, welches ein Nukleierungsmittel enthält.

Bezüglich des Polyamids gelten die vorstehend für die Komponente A) gemachten Ausführungen, weshalb hier zur Vermeidung von Wiederholungen darauf verwiesen wird.

Im allgemeinen ist es bevorzugt, in den Komponenten A) und B) das gleiche Polyamid einzusetzen ; es ist jedoch auch möglich, zwei Polyamide mit unterschiedlichen wiederkehrenden Einheiten oder Polyamide mit gleichen wiederkehrenden Einheiten aber unterschiedlichen Molekulargewichten zu verwenden.

Die als Nukleierungsmittel eingesetzten Substanzen sind die an sich für diesen Zweck bekannten nieder- oder hochmolekularen Verbindungen, die eine beschleunigte und verbesserte Kristallisation des Polyamids bewirken.

Als Nukleierungsmittel seien hier nur Polyamid-6,6, Polyamide aus Terephthalsäure und Hexamethylendiamin, Polyamid-2,2, Polyethylenterephthalat, hochdisperse Kieselsäure, Natriumphenylphosphinat, Talkum und verschiedene Metalloxide, Metallhydroxide oder Metallsalze genannt, wie sie in der US-A-3 080 345 und der BE-A-622 933 beschrieben werden.

Die Nukleierung führt in der Regel dazu, daß die Sphärolithgrößen im Feststoff und auch im Formkörper deutlich geringer sind als bei vergleichbaren nicht nukleierten Polyamiden.

Der höhere Kristallisationsgrad in nukleierten Polyamiden führt in der Regel zu einer Zunahme des Biege- und Elastizitätsmoduls, einer größeren Oberflächenhärte und zu einer Erhöhung der Wärmeformbeständigkeit. Die Reißdehnung und die Schlagzähigkeit werden jedoch in der Regel negativ beeinflußt, d.h. die entsprechenden Werte werden schlechter (s. auch Vergleichsbeispiel 2).

Der Anteil des Nukleierungsmittels an der Komponente B) hängt natürlich sowohl von der Art des eingesetzten Polyamids als auch vom eingesetzten Nukleierungsmittel ab. Im allgemeinen enthält die Komponente B) 0,001 bis 2,5, vorzugsweise 0,005 bis 1,5 und insbesondere 0,01 bis 1 Gew.%, bezogen auf B), an Nukleierungsmittel.

Wegen ihrer guten Wirksamkeit auch in geringen Konzentrationen werden Talkum, Polyamid-2,2 und Natriumphenylphosphinat bevorzugt.

Die Teilchengröße der Feststoffe in den erfindungsgemäßen Mischungen ist an sich nicht kritisch und liegt im allgemeinen im Bereich von 10μm bis 5 cm, vorzugsweise von 1 mm bis 10 mm.

Als Komponente C) können in den erfindungsgemäßen Feststoffmischungen bis zu 60, vorzugsweise 5 bis 50 und insbesondere 10 bis 45 Gew.%, bezogen auf das Gesamtgewicht der Komponenten A) bis C) an faser- oder teilchenförmigen Füll- und Verstärkungsstoffen enthalten sein. Es versteht sich, daß diese Füll- und Verstärkungsstoffe sich von den in der Komponente B) enthaltenen Nukleierungsmitteln unterscheiden.

Als verstärkende Füllstoffe seien hier nur stellvertretend faserförmige Füllstoffe wie Glasfasern, Kohlenstoff-Fasern und faserförmige Silikate wie Wollastonit sowie Glaskugeln genannt. Wie eingangs erwähnt, bringen diese faserförmigen Füllstoffe häufig einen gewissen Grad an Anisotropie der mechanischen Eigenschaften mit sich ; daher werden erfindungsgemäße füllstoffhaltige Formmassen bevorzugt dort eingesetzt, wo dieser Grad an Anisotropie nicht nachteilig ist. In jedem Fall weisen gefüllte Feststoffmischungen gemäß der vorliegenden Erfindung im Vergleich zu konventionellen füllstoffhaltigen Polyamiden, die nur ein Granulat enthalten, verbesserte Schlagzähigkeiten bei tiefen Temperaturen auf.

Die Füllstoffe können sowohl in der Komponente A) als auch in der Komponente B) oder in beiden Komponenten vorhanden sein. Prinzipiell ist es auch möglich, die Füllstoffe unmittelbar vor der Verarbeitung zu Formkörpern zuzugeben, doch ist bei der letzgenannten Variante nicht immer eine gleichmäßige Verteilung der Füllstoffe zu erreichen. Daher wird es im allgemeinen vorgezogen, die Füllstoffe in die Komponenten A) und/oder B) in einem separaten Konfektionierschritt vor der Abmischung der Feststoffe einzuarbeiten.

Zu bemerken ist, daß die Zugabe der Füllstoffe zur Feststoffmischung und nachfolgendes Konfektionieren nicht in jedem Falle vorteilhaft ist, da beim mehrmaligen Aufschmelzen die Feststoffmischungen beim Konfektionieren die vorteilhaften Eigenschaften in den Endprodukten häufig nicht mehr so ausgeprägt zeigen, als wenn direkt aus den Feststoffmischungen Formkörper hergestellt werden. Ganz allgemein ist es vorteilhaft, die Zahl der Aufschmelzvorgänge der Feststoffmischungen bis zur Herstellung der Formkörper möglichst gering zu halten, insbesondere ein Aufschmelzen vor der Endverarbeitung ganz zu vermeiden.

Neben den Komponenten A), B) und gegebenenfalls C) können die erfindungsgemäßen Feststoffmischungen übliche Zusatzstoffe und Verarbeitungshilfsmittel enthalten.

Deren Anteil beträgt im allgemeinen bis zu 10, vorzugsweise bis zu 5 Gew.%, bezogen auf das Gesamtgewicht der Feststoffmischungen.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel wie Farbstoffe und Pigmente, und Weichmacher.

Oxidationsverzögerer und Wärmestabilisatoren, die den Feststoffmischungen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Formmassen, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der Feststoffmischung zugesetzt werden, sind Stearinsäuren, Stearylalkohol, Stearinsäurealkylester und -amide sowie Ester des Pentaerythrits mit langkettigen Fettsäuren.

Als Zusatzstoffe sind auch noch an sich für Polyamide bekannte Flammschutzmittel zu nennen ; insbesondere Phosphorverbindungen oder roter Phosphor selbst sowie die in der DE-A-27 40 092 und der EP-A-55 893 beschriebenen Flammschutzmittelkombinationen.

Die Herstellung der erfindungsgemäßen Feststoffmischungen kann direkt durch einfaches physikalisches Vermischen, ggf. unter Verwendung einer entsprechenden Mischvorrichtung erfolgen. Eine Vermischung über einen Aufschmelzvorgang sollte wegen der bereits genannten Nachteile vermieden werden.

Aufgrund ihrer vorteilhaften Eigenschaften eignen sich die erfindungsgemäßen Feststoffmischungen insbesondere zur Herstellung von Folien und Formkörpern durch Spritzguß oder Extrusion. Derartige Verarbeitungsverfahren sind dem Fachmann gut bekannt.

Die auf diese Weise erhaltenen Formkörper weisen ein insgesamt sehr gutes und ausgeglichenes Niveau der mechanischen Eigenschaften auf.

Untersucht man aus den erfindungsgemäßen Feststoffmischungen hergestellte Formkörper, so läßt sich (z.B. unter dem Polarisationsmikroskop) häufig eine heterogene Sphärolithgrößenverteilung erkennen, d.h. im Formkörper sind benachbarte Bereiche mit deutlich unterschiedlichen Sphärolithgrößen zu erkennen.

Dies rührt wahrscheinlich daher, daß bei einem einmaligen Aufschmelzvorgang das in der Komponente B) enthaltene Nukleierungsmittel sich nicht homogen verteilt und somit auch in der Schmelze Bereiche stark unterschiedlicher Sphärolithgrößen vorliegen, die sich dann im Formkörper widerspiegeln.

Diese Annahme wird dadurch bestätigt, daß die Heterogenität der Sphärolithgrößen deutlich geringer ist, wenn man die Feststoffmischungen vor der eigentlichen Verarbeitung einer Konfektionierung über die Schmelze unterwirft.

Mit dieser Homogenisierung bei mehrmaligem Aufschmelzen geht auch die bereits beschriebene Verschlechterung der mechanischen Eigenschaften einher, so daß zwischen beiden Effekten ein Zusammenhang bestehen könnte.

Beispiele

Zur Herstellung von Feststoffmischungen wurden folgende Komponenten eingesetzt :

Komponente A

Polyhexamethylenadipinsäureamid (Polyamid-6,6) (in Granulatform) mit einer Viskositätszahl von 143 cm³/g (gemessen nach DIN 53 727) (erhältlich als Ultramid®A3 der BASF AG).

Komponente B

B/1 Polyamid-6,6 (entsprechend dem als Komponente A) eingesetzten Produkt wurde mit 0,1 Gew.% Natriumphenylphosphinat versetzt, auf einem Zweischneckenextruder bei 290°C aufgeschmolzen, gemischt, extrudiert und granuliert.

B/2 Polyamid-6,6 (wie in Komponente B/1) wurde mit 0,2 Gew.% Polyamid-2,2 versetzt und entsprechend B/1 konfektioniert.

B/3 Polyamid-6,6 (wie in Komponente B/1) wurde mit 0,1 Gew.% Talkum versetzt und wie bei B/1 konfektioniert.

B/V Zum Vergleich wurde Polyamid-6,6 (wie in B/1) mit 0,002 Gew.% Talkum vermischt und wie bei B/1 konfektioniert.

Zur Herstellung von Formkörpern wurden die Komponenten A) und B) gemischt, aufgeschmolzen und bei einer Massetemperatur von 290°C und einer Werkzeugoberflächentemperatur von 80°C Platten mit den Maßen 100 × 100 mm mit einer Dicke von 2 mm gespritzt.

Aus diesen Platten wurden Rundscheiben von 60 mm Durchmesser gestanzt, an denen die Schädigungsarbeit (mehraxiale Schlagzähigkeit) in Anlehnung an DIN 53 443 bei einer Fallgeschwindigkeit von 5,3 m/s bestimmt wurde.

Die Zusammensetzung der Mischungen und die Ergebnisse der Messungen sind der nachfolgenden Tabelle zu entnehmen.

Tabelle (alle Mengenangaben in Gew.%)

| Bsp. | 1V | 2V | 3 | 4 | 5 |
|---|---|---|---|---|---|
| Komponente A | 100 | | 85 | 85 | 85 |
| Komponente B | - | 100 B/V | 15 B/1 | 15 B/2 | 15 B/3 |
| Schädigungsarbeit (Nm) | | | | | |
| bei 23°C | 135 | 40 | 120 | 90 | 125 |
| -20°C | 30 | 15 | 74 | 50 | 105 |

V = Vergleichsversuch

Die Beispiele zeigen die überlegenen Eigenschaften von Formkörpern aus den erfindungsgemäßen Mischungen gegenüber bisher bekannten Produkten ; vor allem bei tieferen Temperaturen ist der Effekt sehr deutlich.

**Patentansprüche**

1. Feststoffmischung, enthaltend als wesentliche Komponenten,
A) 40 bis 99 Gew.%, bezogen auf das Gesamtgewicht von A) und B), eines nicht-nukleierten thermoplastischen Polyamids und
B) 1 bis 60 Gew.%, bezogen auf das Gesamtgewicht von A) und B), eines thermoplastischen Polyamids, welches ein Nukleierungsmittel enthält,
sowie darüber hinaus
C) 0 bis 60 Gew.%, bezogen auf das Gesamtgewicht von A) + B) + C), faser-oder teilchenförmige Füllstoffe.

2. Feststoffmischung nach Anspruch 1, dadurch gekennzeichnet, daß der Gehalt an Nukleierungsmittel in der Komponente B) 0,001 bis 2,5 Gew.%, bezogen auf B), beträgt.

3. Feststoffmischung nach Anspruch 1, gekennzeichnet durch folgende Gehalte
A) 60 bis 95 Gew.%,
B) 5 bis 40 Gew.%.

4. Feststoffmischung nach den Ansprüchen 1 und 2, dadurch gekennzeichnet, daß als Polyamide in den Komponenten A) und B) Polycaprolactam, Polyhexamethylenadipinsäureamid, Copolyamide aus Caprolactam, Terephthalsäure und Hexamethylendiamin, Copolyamide aus Adipinsäure, Terephthalsäure und Hexamthylendiamin oder Mischungen der vorgenannten Polymeren enthalten sind.

5. Feststoffmischung nach den Ansprüchen 1 bis 4, dadurch gekennzeichnet, daß die Komponente B) als Nukleierungsmittel Natriumphenylphosphinat enthält.

6. Feststoffmischung nach den Ansprüchen 1 bis 4, dadurch gekennzeichnet, daß die Komponente B als Nukleierungsmittel Talkum enthält.

7. Feststoffmischung nach den Ansprüchen 1 bis 4, dadurch gekennzeichnet, daß die Komponente B als Nukleierungsmittel Polyamid-2,2 enthält.

8. Feststoffmischung nach den Ansprüchen 1 bis 7, dadurch gekennzeichnet, daß mindestens eine der Komponenten A) oder B) 5 bis 60 Gew.%, bezogen auf A) bzw. B), eines sich von dem Nukleierungsmittel in der Komponente B) unterscheidenden faser- oder teilchenförmigen Füllstoffs enthält.

9. Verwendung der Feststoffmischung gemäß den Ansprüchen 1 bis 8 zur Herstellung von Folien und Formkörpern.

10. Formkörper, erhältlich aus Feststoffmischungen gemäß den Ansprüchen 1 bis 8 als wesentlichen Komponenten.

11. Formkörper mit heterogener Sphärolithgrößenverteilung, erhältlich aus Feststoffmischungen gemäß den Ansprüchen 1 bis 8 als wesentlichen Komponenten.

## Revendications

1. Mélange de solides contenant, à titre de composants essentiels,

A) 40 à 99% en poids, par rapport au poids global de A) et de B), d'un polyamide thermoplastique, anucléé et

B) 1 à 60% en poids, par rapport au poids global de A) et de B), d'un polyamide thermoplastique, qui contient un agent de nucléation,

comme aussi, de surcroît,

C) 0 à 60% en poids, par rapport au mélange de A) + B) + C), de charges fibreuses ou particulaires.

2. Mélange de solides selon la revendication 1, caractérisé en ce que la teneur en agent de nucléation du composant B) Varie de 0,001 à 2,5% en poids, par rapport à B).

3. Mélange de solides selon la revendication 1, caractérisé par les teneurs suivantes :

A) 60 à 95% en poids,

B) 5 à 40% en poids.

4. Mélange de solides selon les revendications 1 et 2, caractérisé en ce que les composants A) et B) contiennent, à titre de polyamides, le polycaprolactame, le polyhexaméthylèneadipamide, des copolyamides du caprolactame, de l'acide téréphtalique et de l'hexaméthylènediamine, des copolyamides de l'acide adipique, de l'acide téréphtalique et de l'hexaméthylènediamine, ou des mélanges des polymères précités.

5. Mélange de solides selon les revendications 1 à 4, caractérisé en ce que le composant B) contient du phénylphosphinate de sodium à titre d'agent de nucléation.

6. Mélange de solides selon les revendications 1 à 4, caractérisé en ce que le composant B) contient du talc à titre d'agent de nucléation.

7. Mélange de solides suivant les revendications 1 à 4, caractérisé en ce que le composant B) contient du polyamide-2,2 à titre d'agent de nucléation.

8. Mélange de solides suivant les revendications 1 à 7, caractérisé en ce qu'au moins l'un des composants A) et B) contient de 5 à 60% en poids, par rapport à A) ou B) d'une charge fibreuse ou particulaire différente de l'agent de nucléation présent dans le composant B).

9. Utilisation du mélange de solides selon les revendications 1 à 8 pour la fabrication de feuilles et d'articles moulés.

10. Articles moulés que l'on peut obtenir à partir des mélanges de solides selon les revendications 1 à 8 à titre de composants essentiels.

11. Articles moulés à répartition des calibres des sphéroïdes hétérogènes, que l'on peut obtenir à partir des mélanges de solides selon les revendications 1 à 8 à titre de composants essentiels.

## Claims

1. A solid mixture containing as essential components

A) from 40 to 99% by weight, based on the total weight of A) and B), of a nonnucleating thermoplastic polyamide and

B) from 1 to 60% by weight, based on the total weight of A) and B), of a thermoplastic polyamide which contains a nucleating agent,

and in addition

C) from 0 to 60% by weight, based on the total weight of A) + B) + C), of fibrous or particulate fillers.

2. A solid mixture as claimed in claim 1, wherein the content of nucleating agent in component B) is from 0.001 to 2.5% by weight, based on B).

3. A solid mixture as claimed in claim 1, containing

A) from 60 to 95% by weight and

B) from 5 to 40% by weight.

4. A solid mixture as claimed in claim 1 or 2, wherein the polyamides present in components A) and B) are polycaprolactam, polyhexamethyleneadipamide, copolyamides of caprolactam, terephthalic acid and hexamethylenediamine, copolyamides of adipic acid, terephthalic acid and hexamethylenediamine or mixtures thereof.

6

5. A solid mixture as claimed in any of claims 1 to 4, wherein component B) contains sodium phenylphosphinate as nucleating agent.

6. A solid mixture as claimed in any of claims 1 to 4, wherein component B) contains talc as nucleating agent.

7. A solid mixture as claimed in any of claims 1 to 4, wherein component B contains nylon-2,2 as nucleating agent.

8. A solid mixture as claimed in any of claims 1 to 7, wherein at least one of the components A) or B) contains from 5 to 60% by weight, based on A) or B), of a fibrous or particulate filler different from the nucleating agent in component B).

9. Use of a solid mixture as claimed in any of claims 1 to 8 for the production of films and moldings.

10. A molding obtainable from a solid mixture as claimed in any of claims 1 to 8 as essential component.

11. A molding of heterogeneous spherulite size distribution obtainable from a solid mixture as claimed in any of claims 1 to 8 as essential component.